# EUROPÄISCHE PATENTSCHRIFT

(11) **EP 3 508 465 B1**
(45) Veröffentlichungstag und Bekanntmachung des Hinweises auf die Patenterteilung: **29.11.2023**
(21) Anmeldenummer: 18150582.7
(22) Anmeldetag: 08.01.2018
(51) Int. Cl.: C05C 3/00, F28C 3/16

(54) **PRALLBLECHE IM FLIESSBETTKÜHLER**
INTERNAL BAFFLES IN FLUIDISED BED COOLER
TÔLE DE CHICANE DANS LE REFROIDISSEUR À LIT FLUIDISÉ

(43) Veröffentlichungstag der Anmeldung: 10.07.2019
(73) Patentinhaber: thyssenkrupp Fertilizer Technology GmbH, 44141 Dortmund (DE); thyssenkrupp AG, 45143 Essen (DE)
(72) Erfinder: Rieks, Rositsa Marianova, 44137 Dortmund (DE); Gerner, Thomas, 44265 Dortmund (DE)
(74) Vertreter: thyssenkrupp Intellectual Property GmbH

(56) Entgegenhaltungen:
- CN-U- 204 388 653
- DE-A1- 2 205 135
- DE-T2-602004 002 961
- US-A- 2 900 668
- US-A- 4 536 418
- US-A1- 2006 123 602

## Beschreibung

Die Erfindung betrifft einen Fließbettkühler zur Kühlung eines harnstoffhaltigen Granulats, eine Fließbettgranulationsanlage zur Herstellung eines Düngergranulates, die Verwendung der Fließbettgranulationsanlage und ein Verfahren zur Kühlung eines Düngemittelgranulates.

Im Hinblick auf das weltweite Bevölkerungswachstum kommt der Entwicklung von flexiblen und effizienten Düngern eine große und wachsende Bedeutung zu. Dabei spielt nicht nur der Dünger selbst, d.h. die chemische Zusammensetzung, sondern auch die Verarbeitungen in transportfähige Gebinde und die Ausbringung auf dem Feld eine Rolle. Die größte Bedeutung kommt hierbei sicherlich der Granulierung zu gleichmäßigen, in Größe und Beschaffenheit gleichen Partikeln, zu. Wichtige Parameter sind hierbei geringe Staubbildung, Festigkeit, niedrige Aggregationstendenz, homogene Größe, Lagerfähigkeit und Beständigkeit. Eine etablierte Granulationstechnik ist die Fließbettgranulation, welche gegenüber beispielsweise den Prill- und Pastilliertechniken, verbesserte Partikeleigenschaften aufweist.

Ein Beispiel zur Herstellung eines Harnstoffhaltigen Düngergranulates mittels Fließbett Granulation findet sich in der WO 2010/060535 A1, z.B. in den Paragraphen [0025]-[0035], Figur 1 oder der US 4,701,353 A, DE 31 16 778 A1 und US 4,219,589 A.

Einen sehr großen Anteil an der weltweiten Düngerproduktion entfällt auf harnstoffhaltige Dünger. Dieser wasserlösliche Dünger zerfällt im Boden zu Ammoniumsalzen bzw. Nitraten und stellt einen wichtigen Basisdünger dar. Dieser harnstoffhaltige Dünger kann mit weiteren Elementen wie Kalium, Phosphaten, Spurenelementen oder Schwefelverbindungen kombiniert werden.

Der Einsatz von Harnstoff-Schwefel Dünger in der Landwirtschaft ist schon seit längerer Zeit bekannt. In derartigen Düngermischungen können der Pflanze beide Elemente Stickstoff und Schwefel gleichzeitig bereitgestellt werden, so dass Schritte und Kosten zur Ausbringung eines weiteren Düngers eingespart werden können. In Kombination mit Harnstoff ermöglicht dies beispielsweise eine Versorgung der ausgesäten Pflanzen im frühen Stadium mit Stickstoff über den Harnstoff und mit Schwefel in den anschließenden Wachstumsphasen.

Aus diesem Grund kommen Harnstoff-Schwefeldünger mit einer homogenen Versteilung von Harnstoff und Schwefel eine zunehmend größere Bedeutung zu. Beispiele finden sich z.B. in der US 4,330,319 A.

Um eine gute Löslichkeit der stickstoffhaltigen Salze oder eine gute biologische Abbaubarkeit des elementaren Schwefels im Boden zu gewährleisten, sind möglichst kleine Partikel notwendig. Diese kleinen Partikel weisen im Gegensatz zu größeren Partikeln eine im Verhältnis zum Volumen größere Oberfläche auf. Diese größere Oberfläche, insbesondere die größere spezifische Oberfläche (beispielswiese bestimmbar nach der BET-Methode, z.B. nach DIN-ISO 9277) verbessert die Zugänglichkeit der stickstoffhaltigen Salze oder des elementaren Schwefels für die Pflanze beziehungsweise im Boden befindliche Mikroorganismen.

Die im Fließbettgranulator erhaltenen Partikel weisen prozessbedingt eine höhere Temperatur im Bereich von häufig 90-100°C auf. Die in diesem Temperaturbereich vorliegenden Partikel sind in der Regel recht weich und müssen vor der weiteren Behandlung gekühlt werden. Zu diesem Zweck werden die noch heißen Partikel in einen Produktkühler überführt. Dieser ähnelt im Aufbau häufig dem Fließbettgranulator. Dieser Kühler besteht beispielsweise aus einem Ober- und einem Unterteil. Das Granulat fließt durch das Kühleroberteil und wird mit der durch in das Unterteil einströmenden Luft gekühlt. Über beispielsweise eine perforierte Platte und unter der perforierten Platte angeordnete Kühlmediumeintrittsöffnung wird sowohl das Granulat, beispielsweise über einen Luft- oder (inerten) Gasstrom, gekühlt und auch als fluides Medium vom Eingangs- in den Ausgangsbereichs des Kühlers überführt. In kleineren Anlagen kann die voranstehende Kühlstrecke auch als Teil des Granulators ausgebildet sein. Ab einer Tagesproduktion von etwa 2500 mtpd Harnstoff, wird die Kühlstrecke jedoch auch aufgrund der notwendigen Dimensionierung in der Regel als separate Einheit neben dem Fließbettgranulator ausgestaltet.

Beim Transfer des im Granulator erzeugten Granulates in den Kühler kommt es häufig zu einer Ansammlung von Granulat unterhalb der perforierten Platte. Wachsen diese Ansammlungen im Fließbettkühler weiter an, so können diese in der Regel nur durch Abschaltung des Kühlers und damit in der Regel auch des Granulators, aufwendig gereinigt und entfernt werden. Jede Abschaltung ist zwangsläufig mit einem Produktionsausfall und einen kostenintensiven Wiederanfahren der Anlage verbunden.

Die WO 94/03267 A1 offenbart ein Verfahren zur Fließbettgranulation unter Zuhilfenahme eines formaldehydhaltigen Addditves.

Die WO 2005/007619 A1 offenbart ein Verfahren zur Herstellung eines Harnstoffgranulates. Die Fluidisierungsluft enthält feine Tröpfchen.

Die DE 44 16 666 C1 offenbart eine Vorrichtung zum Entwässern und Trocknen von Feststoffen, insbesondere unterwassergranulierten Feststoffen mittels einer mit Entwässerungsöffnungen versehenen Röhre. Die Röhre ist durch ein durchgehend axial und im Wesentlichen diametral aufrecht stehend verlaufendes, wasserdurchlässiges Prallblech abgeplattet.

Die GB 1,340,302 A offenbart einen Trommelkühler für Granulate mit integrierten Prallblechen.

Die DE 60 2004 002 961 T2 offenbart einen Fluidbett-Granulationsprozess sowie eine Vorrichtung zur Granulierung. Die Granulatherstellung und -kühlung erfolgt in einer nacheinander geschalteten Kaskadenausführung. An das Granulationsfluidbett schließt sich unterhalb ein Kühlbett an.

Die CN 204 388 653 offenbart eine Kühlvorrichtung einer Wirbelschicht. Die Kühlvorrichtung umfasst einen Luftblasbehälterkörper und einen Kühlbehälterkörper.

Die Erfindung hat die Aufgabe einen Fließbettkühler bereitzustellen, in welchen die Bildung von Granulatanhäufungen, insbesondere unter der perforierten Platte, vermieden, beziehungsweise vermindert, wird.

Die Aufgabe der Erfindung wird überraschenderweise durch einen Fließbettkühler zur Kühlung eines harnstoffhaltigen Granulats gemäß Anspruch 1 gelöst. Weitere vorteilhafte Ausgestaltungen finden sich in den abhängigen Ansprüchen.

Die Erfindung umfasst des Weiteren eine Fließbettgranulationsanlage zur Herstellung eines Düngergranulates gemäß Anspruch 8, die Verwendung der Fließbettgranulationsanlage zur Herstellung eines Düngergranulates gemäß Anspruch 11 und ein Verfahren zur Kühlung eines Düngemittelgranulates gemäß Anspruch 13. Weitere vorteilhafte Ausgestaltungen finden sich in den abhängigen Ansprüchen.

Der erfindungsgemäße Fließbettkühler zur Kühlung eines harnstoffhaltigen Granulats umfasst mindestens einen Kühlerraum mit einer Produkteingangsöffnung, einer Produktausgangsöffnung und einer in dem Kühlerraum angeordneten perforierten Platte. Bevorzugt teilt die perforierte Platte den Kühlerraum in einen unteren Kühlerraum unterhalb der perforierten Platte und einen oberen Kühlerraum oberhalb der perforierten Platte. Unterhalb der perforierten Platte ist mindestens eine oder mehrere Kühlmediumeintrittsöffnung angeordnet. Durch die Kühlmediumeintrittsöffnung wird ein Kühlmedium, beispielsweise Luft oder ein inertes Gas, unterhalb der perforierten Platte in den unteren Kühlerraum eingeleitet. Über die perforierte Platte erfolgt eine Verteilung des Kühlmediums im Granulat im Fließbett. Die Produkteingangsöffnung ist oberhalb der perforierten Platte angeordnet. Weiterhin ist ein Prallblech zwischen der Produkteingangsöffnung und der perforierten Platte angeordnet. Das Prallblech ermöglicht überraschenderweise eine Abbremsung der Geschwindigkeit der in den Kühlerraum über die Produkteingangsöffnung eintretenden Granulatpartikel ohne zu einer signifikanten Deformierung der Granulatpartikel zu führen.

Bevorzugt ist das Prallblech im Bereich von 50 % bis 80% des Abstandes ausgehend von der Produkteingangsöffnung hin zu der perforierten Platte angeordnet.

Die Verwendung des Prallbleches in dem erfindungsgemäßen Fließbettkühler verringert überaschenderweise die Bildung von Granulatklumpen auf und unterhalb der perforierten Platte um bis zu 90 %.

Erfindungsgemäß ist eine Verteilerplatte zwischen dem Prallblech und der perforierten Platte angeordnet. Die Verteilerplatte bewirkt eine weitere Reduzierung der kinetischen Energie der Granulatpartikel und eine gleichmäßigere Überführung der Granulatpartikel in den Kühlbereich des Fließbettkühlers oberhalb der perforierten Platte vorliegenden fluiden Granulatpartikel.

Erfindungsgemäß ist die Fläche der Verteilerplatte 10 % bis 50 %, besonders bevorzugt 25 % bis 40 % größer als die Fläche des Prallbleches. Die größere Fläche der Verteilerplatte erlaubt eine noch großflächigere und damit auch homogenere Überführung der Granulatpartikel in den Kühlbereich des Fließbettkühlers oberhalb der perforierten Platte.

In einer bevorzugten Ausgestaltung ist das Prallblech plan oder dreidimensional gebogen ausgeführt ist.

Die Biegung des Prallblech kann beispielsweise konvex, konkav, sattelförmig oder in einer komplexen Mischform aus konkaven und konvexen Elementen ausgeführt sein. Besonders bevorzugt sind dachförmige, trapetzförmige, sattelförmige, kreisförmig ummantelte, drei-dimensional gaußförmige Ausgestaltungen des Prallblechs. Die Kanten des Prallbleches können sowohl gebogen als auch in geraden Kanten, sowie in Mischformen ausgeführt sein.

Bevorzugt sind die Verteilerplatte und/oder das Prallblech als perforierte Platten ausgeführt. Die Ausbildung als perforierte Platte verbessert noch zusätzlich die Verteilung des Granulats im Fließbettkühler.

Bevorzugt enthält das Prallblech und/oder das Verteilerblech Metalle, Metalllegierungen,

Kompositwerkstoffe und/oder Kunststoffe, besonders bevorzugt Stahl, Edelstahl, Eisen, Chrom, Aluminium, Vanadium, Nickel und/oder Polymere.

In einer bevorzugten Ausgestaltung weist das Verteilerblech und/oder das Prallblech Öffnungen mit einem mittleren Durchmesser von 10 mm bis 50 mm auf, bevorzugt von 15 mm bis 30 mm. Die Ausbildung von entsprechend dimensionierten Öffnungen verbessert noch zusätzlich die Verteilung des Granulats im Fließbettkühler.

Bevorzugt weist das Verteilerblech Umrandungen auf. Diese Umrandung erhöht die Stabilität des Verteilerblechs.

In einer weiteren bevorzugten Ausführungsform weist das Verteilerblech und/oder das Prallblech eine Befestigung mit der Produkteingangsöffnung (2) auf. Diese Befestigung erhöht die Stabilität des Verteilerblechs und/oder das Prallblechs, da diese der kontinuierlichen Belastung durch das mit hoher kinetischer Energie in den Fließbettkühler gelangende Granulat ausgesetzt sind. Die Befestigung fixiert die Position und ermöglicht die optimale Verteilung der Granulatpartikel.

Die Erfindung umfasst des Weitern eine Fließbettgranulationsanlage zur Herstellung eines Düngergranulates. Die Fließbettgranulationsanlage umfasst mindestens einen Fließbettgranulator mit einer perforierten Granulatorplatte, Saatkornzuleitung, Fluidisierungsgaszuleitung und mindestens eine Schmelzdüse mit einer Atomisierungsgaszuleitung auf. Der Fließbettgranulator weißt in der Regel einen Granulatorraum, die im Granulatorraum angeordnete perforierte Plate und in/auf der perforierten Platte angeordnete erfindungsgemäße Sprühdüsen auf. Die erfindungsgemäßen Sprühdüsen sind bevorzugt mit Zuleitungen für Schmelze aus beispielsweise Harnstoff oder Harnstoff/Schwefel Mischungen sowie einer Zuleitung für das Atomisierungsgas verbunden. Das sich im Granulator befindliche Fließbett steht mit einem fluidisierenden Gasstrom, bevorzugt Luft in Verbindung. Die im Fließbett befindlichen Saatkörner wachsen durch Kontakt mit den im Atomisierungsmedium erzeugten Schmelztröpfchen an. Die fertigen Partikel werden anschließend, beispielsweise über einen Granulatorausgang, in einen ersten Fließbettkühler überführt. Des Weiteren weißt die Fließbettgranulationsanlage Granulationsberförderungsmittel, Siebe, Brecher und Produktkühler auf. Die erfindungsgemäße Fließbettgranulationsanlage ist dadurch gekennzeichnet, dass der erste Fließbettkühler und/oder der Produktkühler einen erfindungsgemäßen Aufbau wie voranstehend beschrieben aufweisen. Der Fließbettkühler weist mindestens einen Kühlerraum mit einer Produkteingangsöffnung, einer Produktausgangsöffnung, einer in dem Kühlerraum angeordneten perforierten Platte und mindestens eine unterhalb der perforierten Platte angeordnete Kühlmediumeintrittsöffnung auf. Der wie voranstehend beschriebene erfindungsgemäße Fließbettkühler ist dadurch gekennzeichnet, dass die Produkteingangsöffnung oberhalb der perforierten Platte angeordnet ist und ein Prallblech zwischen der Produkteingangsöffnung und der perforierten Platte angeordnet sind. Bevorzugt ist eine Verteilerplatte zwischen dem Prallblech und der perforierten Platte angeordnet.

In einer bevorzugten Ausgestaltung ist der der Fließbettgranulator und/oder Fließbettkühler mit einer Abluftbehandlungseinheit verbunden. Die Abluftbehandlungseinheit umfasst bevorzugt mindestens eines oder mehrerer der folgenden Elemente Wäscher und/oder saurer Wäscher, bevorzugt Wäscher und/oder saurer Wäscher mit einer an die saure Wäsche anschließende Neutralisationseinheit. Die Neutralisierung kann beispielsweise durch Zugabe von Ammoniak erfolgen. Beispielhafte Ausgestaltungen finden sich in der WO2010/060535 A1.

Die Erfindung umfasst des Weiteren die Verwendung der vorab beschriebenen erfindungsgemäßen Fließbettgranulationsanlage zur Herstellung eines Düngergranulates enthaltend Ammoniumverbindungen, Nitrate, Phosphate, Harnstoff, elementaren Schwefel, Ammoniumsulfat, UAS (Harnstoff-Ammoniumsulfat) und/oder Gemische davon. Besonders bevorzugt wird die vorab beschriebene erfindungsgemäße Fließbettgranulationsanlage zur Herstellung eines harnstoffhaltigen Düngergranulates verwendet.

Die Erfindung umfasst des Weiteren ein Verfahren zur Kühlung eines Düngemittelgranulates umfassend die Einleitung eines Granulates aus einem Fließbettgranulator oder Granulationsberförderungsmittel in einem wie voranstehend beschriebenen erfindungsgemäßen Fließbettkühler.

Des Weiteren wird die Erfindung anhand der folgenden Figuren näher erläutert. Die Figuren beschränken dabei nicht den Schutzumfang der Erfindung, sondern dienen nur der beispielhaften Erläuterung. Die Figuren sind nicht maßstabsgetreu.

Es zeigen:
Figur 1 einen schematischen Querschnitt durch einen Fließbettkühler nach dem Stand der Technik,
Figur 2 einen schematischen Querschnitt durch einen erfindungsgemäßen Fließbettkühler,
Figur 3 einen vergrößerten schematischen Querschnitt eines erfindungsgemäßen Fließbettkühlers im Bereich des Produkteingangs und
Figur 4 einen vergrößerten schematischen Querschnitt einer bevorzugten Ausführungsform des erfindungsgemäßen Fließbettkühlers im Bereich des Produkteingangs.

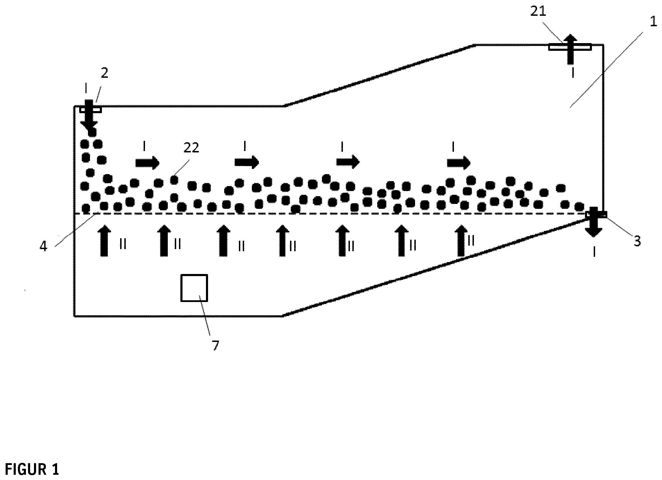

Figur 1 zeigt einen schematischen Querschnitt durch einen Fließbettkühler nach dem Stand der Technik. Der Fließbettkühler umfasst einen Kühlerraum (1) in den das Produkt (22) über eine Produkteingangsöffnung (2) eingebracht wird. Das Produkt (22), beispielsweise ein harnstoffhaltiges Granulat, gelangt ungebremst in das sich auf einer perforierten Platte befindliche, schon vorhandene fluidisierte Produkt (22). Unter der perforierten Platte (4) ist eine Kühlmediumeintrittsöffnung (7) angeordnet, welche einen Gasstrom (II), angedeutet durch die schwarzen Pfeile, erzeugt. Als Gasstrom (II) wird in der Regel Luft eingesetzt, je nach der zu granulierenden Substanz kann alternativ auch ein inertes Gas eingeleitet werden. Das sich im Kühlerraum (1) auf der perforierten Platte befindliche Produkt (22) bewegt sich als fluidisiertes Medium im Produktstrom (I) in Richtung der Produktausgangsöffnung (3). Eine Entlüftung des Kühlerraums ist über eine Entlüftungsöffnung (21) möglich.

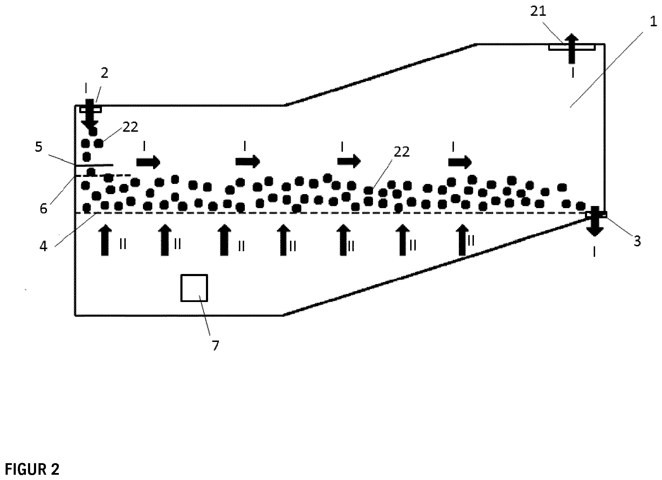

Figur 2 zeigt einen schematischen Querschnitt durch einen erfindungsgemäßen Fließbettkühler. Der Grundaufbau des Fließbettkühlers entspricht dem voranstehend unter Figur 1 beschriebenen Aufbau. Im Unterschied zum Fließbettkühler nach dem Stand der Technik wie in Figur 1 beschrieben, ist ein Prallblech (5) und eine Verteilerplatte (6) zwischen der Produkteingangsöffnung (2) und der perforierten Platte (4) angeordnet. Das Prallblech (5) ermöglicht eine Abbremsung des einströmenden Produkts (22) ohne eine merkliche Zerstörung oder Deformierung der granularen Form des Produkts (22). Die Verteilerplatte (6) ermöglicht eine weitere Abbremsung und gleichmäßigere Einbringung des in Richtung (I) einströmenden Produktes (22). Die erfindungsgemäße Anordnung aus Prallblech (5) und bevorzugt der Verteilerplatte (6) verringert die Anhäufung von Produkt unterhalb der perforierten Platte und verlängert somit die Laufzeit des Fließbettkühlers. Gleichzeitig sinken die Kosten für die Reinigung des Produktkühlers und den damit verbundenen Stillstand der Fließbettgranulationsanlage.

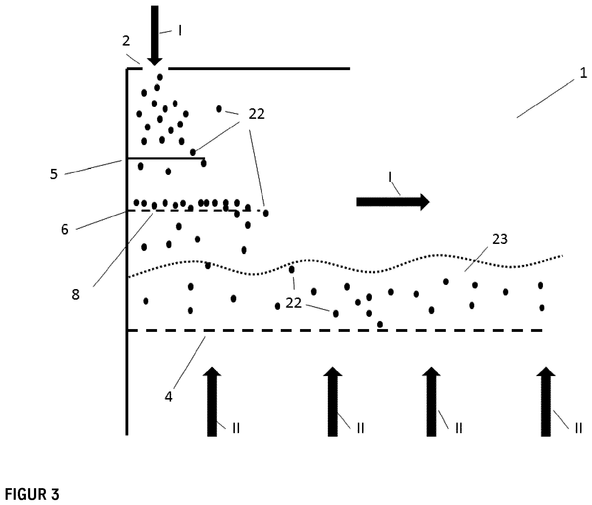

Figur 3 zeigt einen vergrößerten schematischen Querschnitt eines erfindungsgemäßen Fließbettkühlers im Bereich des Produkteingangs. Das Prallblech (5) und die Verteilerplatte (6) sind zwischen der Produkteingangsöffnung (2) und der perforierten Platte (4) angeordnet. Die Verteilerplatte weist in einer optionalen Ausgestaltung Öffnungen (8) auf. Das Prallblech (5) vermindert wie voranstehend beschrieben die Geschwindigkeit und damit die kinetische Energie des einströmenden Produktes (22). Die Verteilerplatte (6) bewirkt eine großflächigere und homogene Einbringung des Produkts (22) in das Fließbett (23) aus fluiden Granulatpartikeln.

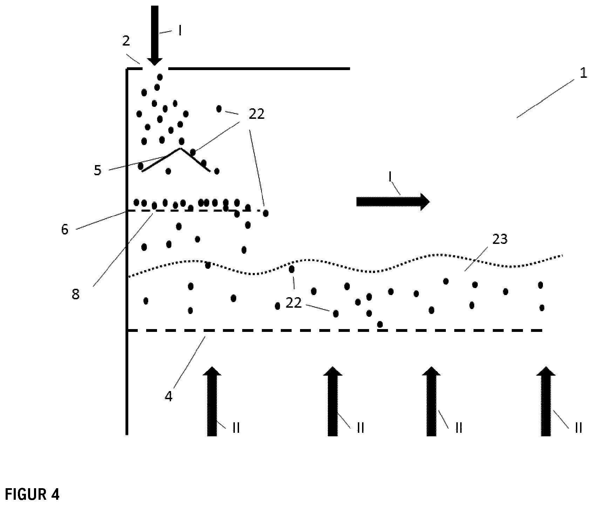

Figur 4 zeigt einen vergrößerten schematischen Querschnitt einer bevorzugten Ausführungsform des erfindungsgemäßen Fließbettkühlers im Bereich des Produkteingangs. Der Aufbau entspricht bis aus das Prallblech (5) dem in Figur 3 beschriebenen. Das Prallblech (5) ist bevorzugt gebogen, im vorliegenden Beispiel dachförmig ausgebildet. Die gebogene Grundform erhöht überraschend die Stabilität und Beständigkeit des Prallblechs (5) im Produktstrom (I) und verteilt das Produkt (22) gleichmäßiger auf der Verteilerplatte (6).

### Bezugszeichenliste:

- (1): Kühlerraum
- (2): Produkteingangsöffnung
- (3): Produktausgangsöffnung
- (4): perforierte Platte
- (5): Prallblech
- (6): Verteilerplatte
- (7): Kühlmediumeintrittsöffnung
- (8): Öffnungen
- (21): Entlüftungsöffnung
- (22): Produkt (Granulat)
- (23): Fließbett
- (I): Fließrichtung des Granulationsproduktes/Produktstrom
- (II): Gasstrom

## Patentansprüche

1. Fließbettkühler zur Kühlung eines harnstoffhaltigen Granulats mindestens umfassend einen Kühlerraum (1) mit einer Produkteingangsöffnung (2), einer Produktausgangsöffnung (3), einer in dem Kühlerraum (1) angeordneten perforierten Platte (4) und mindestens eine unterhalb der perforierten Platte (4) angeordnete Kühlmediumeintrittsöffnung (7), **wobei** die Produkteingangsöffnung (2) oberhalb der perforierten Platte (4) angeordnet ist und ein Prallblech (5) zwischen der Produkteingangsöffnung (2) und der perforierten Platte (4) angeordnet ist, **dadurch gekennzeichnet, dass** eine Verteilerplatte (6) zwischen dem Prallblech (5) und der perforierten Platte (4) angeordnet ist und dass die Fläche der Verteilerplatte (6) 10 % bis 50 %, bevorzugt 25 %bis 40 % größer ist als die Fläche des Prallbleches (5).

2. Fließbettkühler nach Anspruch 1, **dadurch gekennzeichnet, dass** das Prallblech (5) plan oder gebogen, bevorzugt dachförmig, trapezförmig, sattelförmig, kreisförmig ummantelt, dreidimensional gaußförmig, ausgeführt ist.

3. Fließbettkühler nach Anspruch 1 oder 2, **dadurch gekennzeichnet, dass** das Verteilerplatte (6) und/oder das Prallblech (5) als perforierte Platten ausgeführt sind.

4. Fließbettkühler nach mindestens einem der Ansprüche 1 bis 3, **dadurch gekennzeichnet, dass** das Prallblech (5) und/oder das Verteilerblech (6) Metalle, Metalllegierungen, Kompositwerkstoffe und/oder Kunststoffe enthält, bevorzugt Stahl, Edelstahl, Eisen, Chrom, Aluminium, Vanadium, Nickel, Polymere.

5. Fließbettkühler nach mindestens einem der Ansprüche 1 bis 4, **dadurch gekennzeichnet, dass** das Verteilerblech (6) und/oder das Prallblech (5) Öffnungen (8) mit einem mittleren Durchmesser von 10 mm bis 50 mm aufweist, bevorzugt von 15 mm bis 30 mm.

6. Fließbettkühler nach mindestens einem der Ansprüche 1 bis 5, **dadurch gekennzeichnet, dass** das Verteilerblech (6) Umrandungen aufweist.

7. Fließbettkühler nach mindestens einem der Ansprüche 1 bis 6, **dadurch gekennzeichnet, dass** das Verteilerblech (6) und/oder das Prallblech (5) eine Befestigung mit der Produkteingangsöffnung (2) aufweisen.

8. Fließbettgranulationsanlage zur Herstellung eines Düngergranulates mindestens umfassend:
- einen Fließbettgranulator mit einer perforierten Granulatorplatte, Saatkornzuleitung, Fluidisierungsgaszuleitung mindestens einer Schmelzdüse mit einer Atomisierungsgaszuleitung;
- ersten Fließbettkühler;
- Granulationsberförderungsmittel;
- Siebe, Brecher und
- Produktkühler,
**dadurch gekennzeichnet, dass** der erste Fließbettkühler und/oder der Produktkühler einen Aufbau gemäß einen oder mehreren der Ansprüche 1 bis 7 aufweisen.

9. Fließbettgranulationsanlage nach Anspruch 8, **dadurch gekennzeichnet, dass** der Fließbettgranulator, Produktkühler und/oder Fließbettkühler mit einer Abluftbehandlungseinheit verbunden ist.

10. Fließbettgranulationsanlage nach Anspruch 9, **dadurch gekennzeichnet, dass** die Abluftbehandlungseinheit mindestens eines oder mehrere der folgenden Elemente Wäscher und/oder saurer Wäscher umfasst, bevorzugt Wäscher und/oder saurer Wäscher mit einer Neutralisationseinheit umfasst.

11. Verwendung der Fließbettgranulationsanlage nach einem der Ansprüche 8 bis 10 zur Herstellung eines Düngergranulates enthaltend Ammoniumverbindungen, Nitrate, Phosphate, Harnstoff, elementaren Schwefel, Ammoniumsulfat, UAS (Harnstoff-Ammoniumsulfat), und/oder Gemische davon.

12. Verwendung der Fließbettgranulationsanlage nach Anspruch 11 zur Herstellung eines harnstoffhaltigen Düngergranulates.

13. Verfahren zur Kühlung eines Düngemittelgranulates umfassend die Einleitung eines Granulates aus einem Fließbettgranulator oder Granulationsberförderungsmittel in einem Fließbettkühler nach mindestens einem der Ansprüche 1 bis 7.

## Claims

1. Fluidised-bed cooler for cooling a urea-containing granulate, at least comprising a cooler chamber (1) with a product inlet opening (2), a product outlet opening (3), a perforated plate (4) arranged in the cooler chamber (1) and at least one cooling medium inlet opening (7) arranged below the perforated plate (4), **wherein** the product inlet opening (2) is arranged above the perforated plate (4) and a baffle plate (5) is arranged between the product inlet opening (2) and the perforated plate (4), **characterised in that** a distributor plate (6) is arranged between the baffle plate (5) and the perforated plate (4) and that the area of the distributor plate (6) is 10% to 50%, preferably 25% to 40% larger than the area of the baffle plate (5).

2. Fluidised-bed cooler according to claim 1, **characterised in that** the baffle plate (5) is flat or curved, preferably roof-shaped, trapezoidal, saddle-shaped, circularly sheathed, three-dimensionally Gaussian.

3. Fluidised-bed cooler according to claim 1 or 2, **characterised in that** the distributor plate (6) and/or the baffle plate (5) are designed as perforated plates.

4. Fluidised-bed cooler according to at least one of claims 1 to 3, **characterised in that** the baffle plate (5) and/or the distribution plate (6) contains metals, metal alloys, composite materials and/or plastics, preferably steel, stainless steel, iron, chromium, aluminium, vanadium, nickel, polymers.

5. Fluidised-bed cooler according to at least one of claims 1 to 4, **characterised in that** the distributor plate (6) and/or the baffle plate (5) has openings (8) with an average diameter of 10 mm to 50 mm, preferably of 15 mm to 30 mm.

6. Fluidised-bed cooler according to at least one of claims 1 to 5, **characterised in that** the distributor plate (6) has surrounds.

7. Fluidised-bed cooler according to at least one of claims 1 to 6, **characterised in that** the distributor plate (6) and/or the baffle plate (5) have an attachment with the product inlet opening (2).

8. Fluidised bed granulation plant for the production of a fertiliser granulate, at least comprising:
- a fluidised bed granulator with a perforated granulator plate, seed feed line, fluidisation gas feed line at least one melting nozzle with an atomisation gas feed line;
- first fluidised bed cooler;
- Granulation boosters;
- Sieves, crushers and
- Product cooler,
**characterised in that** the first fluidised bed cooler and/or the product cooler comprises a structure according to one or more of claims 1 to 7.

9. Fluidised bed granulation plant according to claim 8, **characterised in that** the fluidised bed granulator, product cooler and/or fluidised bed cooler is connected to an exhaust air treatment unit.

10. Fluidised bed granulation plant according to claim 9, **characterised in that** the exhaust air treatment unit comprises at least one or more of the following elements scrubbers and/or acid scrubbers, preferably comprising scrubbers and/or acid scrubbers with a neutralisation unit.

11. Use of the fluidised bed granulation plant according to any one of claims 8 to 10 for the production of a fertiliser granulate containing ammonium compounds, nitrates, phosphates, urea, elemental sulphur, ammonium sulphate, UAS (urea-ammonium sulphate), and/or mixtures thereof.

12. Use of the fluidised bed granulation plant according to claim 11 for the production of a urea-containing fertiliser granulate.

13. A method of cooling a fertilizer granule comprising introducing a granule from a fluid bed granulator or granulation conveying means into a fluid bed cooler according to at least one of claims 1 to 7.

## Revendications

1. Refroidisseur à lit fluidisé pour le refroidissement d'un granulé contenant de l'urée, comprenant au moins une chambre de refroidissement (1) avec une ouverture d'entrée de produit (2), une ouverture de sortie de produit (3), une plaque perforée (4) disposée dans la chambre de refroidissement (1) et au moins une ouverture d'entrée de fluide de refroidissement (7) disposée en dessous de la plaque perforée (4), l'ouverture d'entrée de produit (2) étant disposée au-dessus de la plaque perforée (4) et une chicane (5) étant disposée entre l'ouverture d'entrée de produit (2) et la plaque perforée (4), caractérisé en **ce qu**'une plaque de répartition (6) est disposée entre la chicane (5) et la plaque perforée (4) et en ce que la surface de la plaque de répartition (6) est de 10 % à 50 %, de préférence de 25 % à 40 %, supérieure à la surface de la chicane (5).

2. Refroidisseur à lit fluidisé selon la revendication 1, **caractérisé en ce que** la chicane (5) est plane ou cintrée, de préférence en forme de toit, trapézoïdale, en forme de selle, à enveloppe circulaire, gaussienne en trois dimensions.

3. Refroidisseur à lit fluidisé selon la revendication 1 ou 2, **caractérisé en ce que** la plaque de répartition (6) et/ou la chicane (5) sont réalisées sous forme de plaques perforées.

4. Refroidisseur à lit fluidisé selon au moins l'une des revendications 1 à 5, **caractérisé en ce que** la chicane (5) et/ou la tôle de répartition (6) contient des métaux, des alliages de métaux, des matériaux composites et/ou des matières plastiques, de préférence de l'acier, de l'acier inoxydable, du fer, du chrome, de l'aluminium, du vanadium, du nickel, des polymères.

5. Refroidisseur à lit fluidisé selon au moins l'une des revendications 1 à 4, **caractérisé en ce que** la tôle de répartition (6) et/ou la tôle de rebondissement (5) présentent des ouvertures (8) d'un diamètre moyen de 10 mm à 50 mm, de préférence de 15 mm à 30 mm.

6. Refroidisseur à lit fluidisé selon au moins l'une des revendications 1 à 5, **caractérisé en ce que** la tôle de répartition (6) présente des bordures.

7. Refroidisseur à lit fluidisé selon au moins l'une des revendications 1 à 6, **caractérisé en ce que** la tôle de répartition (6) et/ou la tôle d'impact (5) présentent une fixation avec l'ouverture d'entrée de produit (2).

8. Installation de granulation à lit fluidisé pour la production d'un granulé d'engrais comprenant au moins :
- un granulateur à lit fluidisé comprenant une plaque de granulateur perforée, une conduite d'alimentation en graines, une conduite d'alimentation en gaz de fluidisation, au moins une buse de fusion avec une conduite d'alimentation en gaz d'atomisation ;
- premier refroidisseur à lit fluidisé ;
- Agent de stimulation de la granulation ;
- Cribles, concasseurs et
- Refroidisseur de produits,
**caractérisé en ce que** le premier refroidisseur à lit fluidisé et/ou le refroidisseur de produit ont une structure selon une ou plusieurs des revendications 1 à 7.

9. Installation de granulation à lit fluidisé selon la revendication 8, **caractérisée en ce que** le granulateur à lit fluidisé, le refroidisseur de produit et/ou le refroidisseur à lit fluidisé est relié à une unité de traitement d'air d'évacuation.

10. Installation de granulation à lit fluidisé selon la revendication 9, **caractérisée en ce que** l'unité de traitement des effluents gazeux comprend au moins un ou plusieurs des éléments suivants : laveur et/ou laveur acide, de préférence comprenant un laveur et/ou un laveur acide avec une unité de neutralisation.

11. Utilisation de l'installation de granulation à lit fluidisé selon l'une des revendications 8 à 10 pour la fabrication d'un granulé d'engrais contenant des composés d'ammonium, des nitrates, des phosphates, de l'urée, du soufre élémentaire, du sulfate d'ammonium, de l'UAS (sulfate d'urée et d'ammonium), et/ou des mélanges de ceux-ci.

12. Utilisation de l'installation de granulation à lit fluidisé selon la revendication 11 pour la production d'un granulé d'engrais contenant de l'urée.

13. Procédé de refroidissement d'un granulé d'engrais comprenant l'introduction d'un granulé provenant d'un granulateur à lit fluidisé ou d'un convoyeur de granulation dans un refroidisseur à lit fluidisé selon au moins l'une des revendications 1 à 7.
